Europäisches Patentamt

European Patent Office

Office européen des brevets

(19)

(11) Publication number: **0 066 629**
**A1**

## (12) EUROPEAN PATENT APPLICATION

published in accordance with Art. 158(3) EPC

(21) Application number: 82900037.1

(51) Int. Cl.³: **B 25 J 19/00**

(22) Date of filing: 10.12.81

Data of the international appli-
cation taken as a basis:

(86) International application number:
**PCT/JP 81/00377**

(87) International publication number:
**WO 82/02019 (24.06.82 82/16)**

(30) Priority: 11.12.80 JP 173747/80

(43) Date of publication of application: 15.12.82
**Bulletin 82/50**

(84) Designated Contracting States: **DE FR GB**

(71) Applicant: **FANUC LIMITED, 5-1, Asahigaoka, 3-chome,
Hino-shi Tokyo 191 (JP)**

(72) Inventor: **INABA, Hajimu, 5-3-16, Asahigaoka Hino-shi,
Tokyo 191 (JP)**
Inventor: **SAKAKIBARA, Shinsuke, 1-2-12-6, Naka
Kunitachi-shi, Tokyo 186 (JP)**
Inventor: **NIHEI, Ryo, 1-34-7-202, Honcho Kichijoji,
Musashino-shi Tokyo 180 (JP)**

(74) Representative: **Blumbach Weser Bergen Kramer
Zwirner Hoffmann Patentanwälte, Radeckestrasse 43,
D-8000 München 60 (DE)**

(54) SAFETY MECHANISM FOR INDUSTRIAL ROBOT.

(57) A safety mechanism for an industrial robot, in which a switch actuator (46) is disposed between the arm and the hand of the industrial robot to sense mechanical impact relative to the arm or hand of the robot, and a fixedly disposed limit switch (48) which is ordinarily operated by the switch actuator and stops operation when the actuator senses a predetermined mechanical impact.

## DESCRIPTION
## A SAFEGUARD MECHANISM OF AN INDUSTRIAL ROBOT

FIELD OF THE INVENTION

The present invention relates to a safeguard mechanism of an industrial robot.

BACKGROUND ART

Industrial robots are conventionally used in combination with diverse kinds of machines, such as machine tools, for the purpose of automatically conveying articles from a predetermined position to a machine, and vice versa. For example, when the industrial robots are used in combination with machine tools, the industrial robots convey unmachined workpieces from workpiece tables to the machine tools and return the machined workpieces from the machine tools to the workpiece tables, without operator intervention. More specifically, the industrial robots perform all the manipulating operations involved in the conveyance of articles in accordance with operating commands issued by a robot controller, the controller having been programmed with operating commands prior to the start of the manipulating operations. However, industrial robots occasionally, though very rarely, move out of control resulting in such accidents as the robot hands, attached to the outermost end of the robot arm of the industrial robots, striking an object or objects placed around the machines or striking the industrial robots themselves. Therefore, industrial robots are conventionally provided with such safeguards as brittle portions intentionally formed at positions adjacent to the connection of the robot hands to the robot arms, whereby the robot hands striking an object will immediately break only the brittle portions. When the breaking of the brittle portions is detected, the entire operation of the industrial robots is immediately stopped, ensuring the safety of the bodies of the industrial robots. However, the above-mentioned conventional safeguard suffers from the disadvantage that it takes a long time to repair the broken portions and restore the operating function of the industrial robots. Moreover, after the completion of the repair of the broken portions, it is necessary to adjust the position of the robot hands with the robot arms before restarting the industrial robots, so as to enable reuse of the operating commands previously stored in the robot controllers without any correction. Failure to do so would result in inaccurate operation of the industrial robots. It should be noted that proper adjustment of the positions of robot hands and robot arms of industrial robots is rather difficult.

An object of the present invention is to provide a novel safeguard mechanism for industrial robots which is distinctively different from the above-mentioned conventional mechanism employing the intentional formation of a brittle portion as part of industrial robots.

Another object of the present invention is to provide a safeguard mechanism for industrial robots wherein any shock applied to the industrial robots due to the striking of the robot hands against any object creates a detection signal which immediately stops all operation of the industrial robots, thereby preventing any damage to the industrial robots and eliminating the need for adjustment of the position of the robot hands prior to restarting the industrial robots.

DESCRIPTION OF THE DRAWING

Fig. 1 is a perspective view illustrating the general construction of an industrial robot into which a safeguard mechanism according to the present invention is incorporated;

Fig. 2 is a cut-away perspective view of a safeguard mechanism according to the present invention;

Fig 3 is a cross-sectional view of the same safeguard mechanism; and

Figs. 4 and 5 are cut-away perspective views of the safeguard mechanism according to further embodiments of the present invention, respectively.

BEST MODE FOR CARRYING OUT THE INVENTION

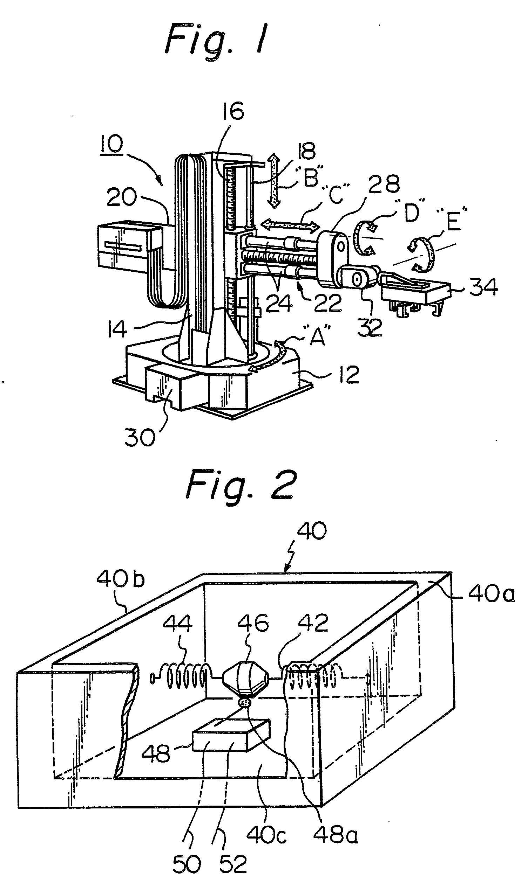

Referring now to Fig. 1, which illustrates the general construction of an industrial robot into which a safeguard mechanism according to the present invention is incorporated, the industrial robot 10 is provided at its lowermost part with a base 12 to be fixed to a floor surface. A vertical column 14 is mounted on the base 12 so as to extend upwardly. At the near side of the vertical column 14, there are mounted on the base 12, a vertical feed screw 16 rotatable about its own axis and a guide rod 18. The vertical column 14, the feed screw 16, and the guide rod 18 can all be turned in the direction shown by the arrow "A" with respect to the base 12. The rotation of the feed screw 16 about its own axis is controlled by an appropriate motor mounted in the interior of the base 12. A robot trunk 20 is mounted on both feed screw 16 and guide rod 18. More specifically, the robot trunk 20 is provided therein with a female screw portion engaging the feed screw 16 and with a bearing portion engaging the guide rod 18. Therefore, the rotation of the feed screw 16 vertically moves the robot trunk 20 in the direction shown by the arrow "B" guided by the guide rod 18. A manipulating arm 22 is incorporated in the robot trunk 20, said arm 22 being comprised of two horizontally extending rods 24 and a feed screw rod (not shown) arranged horizontally within the robot trunk 20. The manipulating arm 22 is provided, at its horizontal front end, with a bracket element 28. The manipulating arm 22 is capable of extending outwardly from the robot trunk 20 and retracting inwardly toward the robot trunk 20, in the direction shown by the arrow "C" in accordance with the rotation of the feed screw rod about its own horizontal axis. A control box 30 is attached to the side of the robot base 12 and forms a junction between the industrial robot 10 and a robot controller (not shown). A robot wrist 32 is attached to the bracket 28 of the manipulating arm 22, so as to be able to turn in the direction shown by the arrow "D". A robot hand 34 for grasping an article, such as a workpiece, is attached to the foremost end of the robot wrist 32 and is able to turn in the direction shown by the arrow "E". From the foregoing description, it will be understood that since the industrial robot 10 can move diversely as shown arrows "A" through "E", the robot hand 34, the outermost movable element of the industrial robot 10, can grasp and carry a workpiece (not shown) to and from an associated machine. It should be understood that although every movement of the industrial robot 10 is effected under the control of the robot controller, occasionally the industrial robot 10 may move out of control causing the robot hand 34 to strike some object disposed around the robot 10 and the machine. Accordingly, a safeguard mechanism embodying the present invention is incorporated into the industrial robot 10.

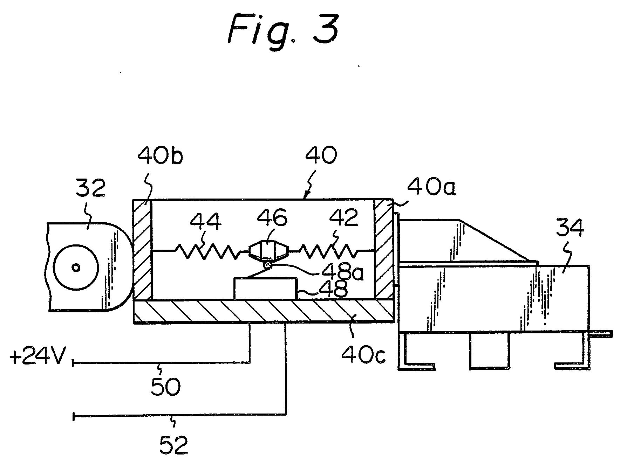

Fig. 2 is a cut-away perspective view of the safeguard mechanism embodying the present invention. Fig. 3 is a cross-sectional view of the safeguard mechanism of Fig. 2, which is arranged between the wrist portion and the robot hand of the industrial robot.

The safeguard mechanism according to the present invention is provided with a bracket 40 having a general shape of a box. This box-like bracket 40 has a rear plate 40b connected to the robot wrist 32 of the industrial robot 10, a front plate 40a connected to the robot hand 34 for gripping the workpiece, and a bottom plate 40c. Inside the box-like bracket 40, a switch actuator 46 is stably supported by a pair of resilient means 42 and 44 between the front and rear plates 40a and 40b. The resilient means 42 and 44 are made of, for example, coil springs. The switch actuator 46 is held at a position where the spring force of the resilient means 42 is in equilibrium with the spring force of the resilient means 44. A limit switch 48 is fixedly mounted on the bottom plate 40c of the box-like bracket 40. The switch arm 48a of this limit switch 48 is abutted against the switch actuator 46 while the switch actuator 46 is held at the equilibrium position of the resilient means 42 and 44, whereby the limit switch 48 is kept at a closed state. In the above--described safeguard mechanism of the present invention, the resilient means 42 and 44 may also be made of a pair of leaf springs or of appropriate rubber members, in addition to the pair of coil springs shown in Fig. 2. Further, the shape of the switch actuator 46 is not limited to that shown in Fig. 2, and may be of the shape of, for example, a ball, as long as the switch actuator 46 is arranged so that it actuates the switch arm 48a of the limit switch 48 when it is held at the equilibrium position and that it deactuates the switch arm 48a of the limit switch 48 when it is shifted from the equilibrium position by the deformation of the resilient means 42 and 44. One electric line 50 of the limit switch 48 is connected to an electric power source of +24 electric volts via the control box 30 (Fig. 1) of the industrial robot 10, while the other electric line 52 is connected to an emergency stop line in the robot controller via the control box 30. At this stage, it should be understood that the connection of the front plate 40a of the box-like bracket 40 to the robot hand 34 as well as the connection of the rear plate 40b of the box-like bracket 40 to the robot wrist 32 are conventional mechanical connections for the robot hand 34 and the robot wrist 32.

The operation of the safeguard mechanism incorporated into the industrial robot will be described hereinbelow.

While the industrial robot 10 is performing its manipulating operations, if the robot hand 34 for gripping the workpiece contacts or strikes an object or a machine disposed around the industrial robot, the mechanical shock is transmitted from the robot hand 34 to the box-like bracket 40 of the safeguard mechanism. The switch actuator 46 held by the resilient means 42 and 44 within the box-like bracket 40 is moved up and down or right and left in accordance with the deformation of the resilient means 42 and 44. The switch actuator 46 then separates from and deactuates the switch arm 48a of the limit switch 48. This switches the limit switch 48 from the closed state to the open state and breaks the connection between the electric lines 50 and 52. In the emergency stop line of the robot controller of the industrial robot 10, the open state of the limit switch 48 is detected, and a signal indicative of an emergency stop is issued so as to immediately stop the manipulating operation of the industrial robot. All movement of the manipulating arm 22 (Fig. 1), the robot wrist 32, and the robot hand 34 of the industrial robot 10 are completely stopped. Thereafter, the operator clears the cause for the emergency stop of the manipulating operation of the industrial robot 10. The switch actuator 46 of the safeguard mechanism is returned to the equilibrium position and is engaged with the switch arm 48a of the limit switch 48 so as to actuate the switch arm 48a. This closes the limit switch 48 and cancels the emergency stop signal in the emergency stop line of the robot controller. The industrial robot 10 can then restart the manipulating operation.

From the foregoing description, it will be understood that an industrial robot incorporating a safeguard mechanism of the present invention can immediately stop its manipulating operation upon detection of mechanical shock. Therefore, there is no intentional breakage of a part of the industrial robot, and as soon as the cause for the mechanical shock is cancelled, the manipulating operation of the industrial robot is automatically restarted. That is to say, according to the present invention, even if the industrial robot strikes against or collides with an object due to the industrial robot's uncontrolled movement, the industrial robot itself is not damaged. Thus, after the cause of the collision is cancelled, the industrial robot can restart its manipulating operation at once.

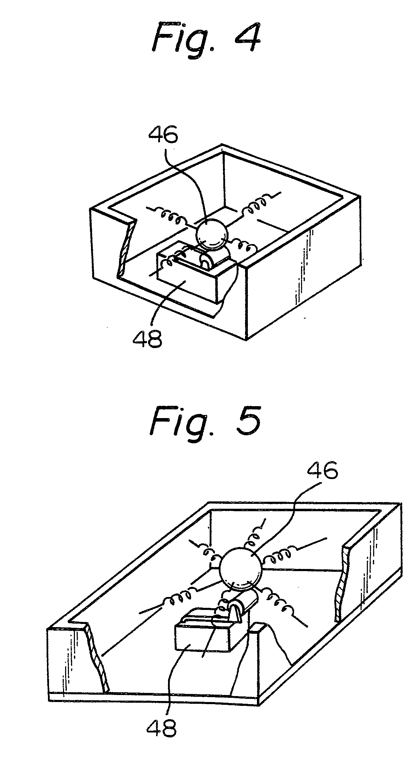

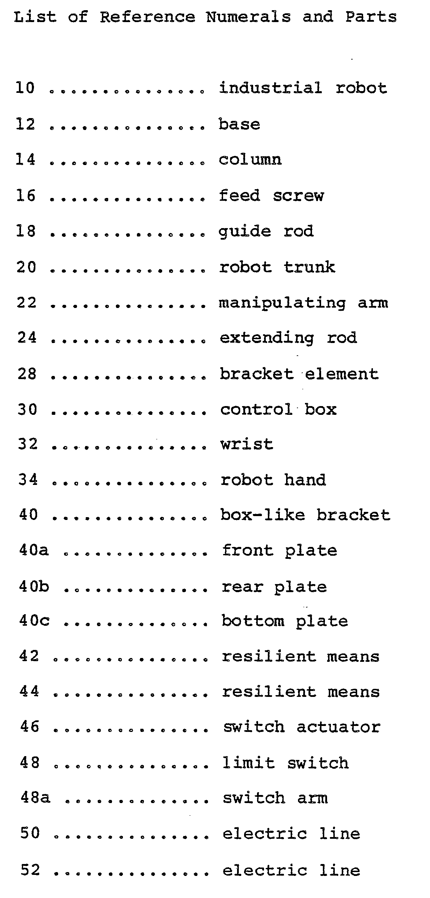

Figs. 4 and 5 illustrate the other embodiments of the safeguard mechanism according to the present invention. From the illustration of Figs. 4 and 5, it will be understood that the switch actuator 46 is held by two or more pairs of resilient means. The safeguard mechanisms of Figs. 4 and 5 are obviously arranged between the robot hand and the robot wrist.

0066629

## CLAIMS

1.   A safeguard mechanism provided for an industrial robot having a robot arm movably mounted on a robot trunk and a robot hand connected to the robot arm for gripping an article, such as a workpiece, said safeguard mechanism being arranged between said robot arm and said robot hand and comprising a first means for sensing a mechanical shock applied to either said robot arm or said robot hand and a second means for issuing a signal to stop all operations of said industrial robot when said first means senses said mechanical shock.

2.   A safeguard mechanism according to claim 1, wherein said first means of said safeguard mechanism comprises a bracket member fixedly arranged between said robot arm and said robot hand and a switch actuator held by resilient means at a predetermined equilibrium position of said resilient means within said bracket member, wherein said second means comprises a limit switch fixed to said bracket member and closed by said switch actuator while said switch actuator is held at said predetermined equilibrium position.

3.   A safeguard mechanism according to claim 2, wherein said bracket member has a back plate connected to said robot arm, a front plate connected to said robot hand, and a bottom plate on which said limit switch is fixedly mounted. wherein said resilient means comprises at least a pair of coil springs to hold said switch actuator at said predetermined equilibrium position between said front and back plates.

## Fig. 1

## Fig. 2

# Fig. 3

*Fig. 4*

46

48

*Fig. 5*

46

48

- 4 -

List of Reference Numerals and Parts

10 ................ industrial robot

12 ................ base

14 ................ column

16 ................ feed screw

18 ................ guide rod

20 ................ robot trunk

22 ................ manipulating arm

24 ................ extending rod

28 ................ bracket element

30 ................ control box

32 ................ wrist

34 ................ robot hand

40 ................ box-like bracket

40a ............... front plate

40b ............... rear plate

40c ............... bottom plate

42 ................ resilient means

44 ................ resilient means

46 ................ switch actuator

48 ................ limit switch

48a ............... switch arm

50 ................ electric line

52 ................ electric line

# INTERNATIONAL SEARCH REPORT

International Application No **PCT/JP81/00377**

## I. CLASSIFICATION OF SUBJECT MATTER (if several classification symbols apply, indicate all)

According to International Patent Classification (IPC) or to both National Classification and IPC

Int. Cl.$^3$    B25J 19/00

## II. FIELDS SEARCHED

### Minimum Documentation Searched [4]

| Classification System | Classification Symbols |
|---|---|
| I P C | B25J 15/00, 17/00 - 02, 19/00 |

### Documentation Searched other than Minimum Documentation to the Extent that such Documents are included in the Fields Searched [5]

| | |
|---|---|
| Jitsuyo Shinan Koho | 1965 - 1981 |
| Kokai Jitsuyo Shinan Koho | 1971 - 1981 |

## III. DOCUMENTS CONSIDERED TO BE RELEVANT [14]

| Category [*] | Citation of Document, [16] with indication, where appropriate, of the relevant passages [17] | Relevant to Claim No. [18] |
|---|---|---|
| Y | JP,Y1, 50-32929  (Tokyo Keiki Seizosho Kabu-shiki Kaisha)   25, September, 1975 (25.09.75) Column 2, line 12 to column 3, line 18 | 1 - 3 |
| Y | JP,A, 56-62779  (Nordson Corporation) 28, May, 1981  (28.05.81)  Column 51, lines 6 to 16 | 1 - 3 |

"Y"    document of particular relevance; the claimed invention cannot be considered to involve an inventive step when the document is combined with one or more other such documents, such combination being obvious to a person skilled in the art

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search [2] | Date of Mailing of this International Search Report [2] |
|---|---|
| March 8, 1982  (08.03.82) | March 15, 1982 (15.03.82) |
| International Searching Authority [1] | Signature of Authorized Officer [20] |
| Japanese Patent Office | |

Form PCT/ISA/210 (second sheet) (October 1977)